## Europäisches Patentamt

## European Patent Office

## Office européen des brevets

(11) Veröffentlichungsnummer: **0 216 035 B1**

(12) **EUROPÄISCHE PATENTSCHRIFT**

(45) Veröffentlichungstag der Patentschrift:
12.09.90

(51) Int. Cl.⁵: **G01G 21/28**, G01G 21/30

(21) Anmeldenummer: 86109104.9

(22) Anmeldetag: 03.07.86

(54) Analysenwaage.

(30) Priorität: 18.09.85 CH 4056/85

(43) Veröffentlichungstag der Anmeldung:
01.04.87 Patentblatt 87/14

(45) Bekanntmachung des Hinweises auf die Patenterteilung:
12.09.90 Patentblatt 90/37

(84) Benannte Vertragsstaaten:
DE FR GB IT

(73) Patentinhaber: Mettler-Toledo AG, Im Langacher,
CH-8606 Greifensee(CH)

(72) Erfinder: Lüchinger, Paul, Guldenenstrasse 49,
CH-8610 Uster(CH)
Erfinder: Rutishauser, Heinz, Wassbergstrasse 3,
CH-8610 Uster(CH)
Erfinder: Wachter, Hanspeter, Bettlistrasse 14,
CH-8600 Dübendorf(CH)

(56) Entgegenhaltungen:
EP-A- 0 059 985
WO-A-82/02536
CH-A- 559 901
DE-A- 2 505 890

SIEMENS FORSCHUNGS- UND
ENTWICKLUNGSBERICHTE, Band 10, Nr. 5, 1981,
Seiten 316-322, Springer Verlag, Würzburg, DE; D.
KLUGMANN et al.: "Principles and applications of
automatic speech recognition"

## Beschreibung

Die Erfindung geht aus von einer Analysenwaage mit einem durch bewegliche Gehäuseteile verschließbaren Wägeraum.

Beim Wägen einer Substanz auf einer Analysenwaage mit einem verschließbaren Wägeraum ist für die Beschickung der Waage mindestens einer der beweglichen Gehäuseteile zu öffnen und danach wieder zu schließen. Zum einmaligen Dosieren eines Wägegutes, z.B. mit einem Spachtel, müssen bei den bekannten Waagen mindestens fünfzehn Handgriffe vorgenommen werden. Nämlich: Gehäuseteil (Fenster) öffnen, Gefäß auf Waageschale stellen, Gehäuseteil schließen, Tarieren, Spachtel ergreifen, Wägegut auf Spachtel bringen, Gehäuseteil öffnen, Eindosieren, Spachtel aus dem Wägeraum entnehmen, Windschutz schließen, Resultat abwarten, Windschutz öffnen, Gefäß herausnehmen, Windschutz schließen.

Das Öffnen und Schließen des Windschutzes, insgesamt sechsmal, erfordert immer das Weglegen entweder des Gefäßes oder des Spachtels, welche beide die Bedienungsperson zu Beginn der Wägung bereits in den Händen trägt und nach der Wägung wieder entfernen muß. Die Handgriffe sind umständlich und zeitraubend, zumal regelmäßig die Hand den Wägeraum öffnet/schließt, die auch den Spachtel führt.

Aus der Schweizer Patentschrift 559 901 ist eine Waage der eingangs genannten Art bekannt, bei der die beiden seitlichen Gehäuseteile (Schiebefenster) mit einer Koppelungseinrichtung zum synchronen Öffnen und Schließen miteinander verbunden sind, wobei die Bedienung sowohl mit der linken als auch mit der rechten Hand möglich ist. Auf diese Weise wird erreicht, daß jeweils eine Hand frei bleibt für eine weitere Manipulation oder zum Halten eines Gegenstandes, und daß gleichzeitig mit der anderen Hand das Schiebefenster geöffnet werden kann.

Eine Lösung zur konsequenten Verringerung der Handgriffe bietet die bekannte Vorrichtung nicht.

Es ist bekannt (WO-82/02 536), an der in Schließrichtung weisenden Kante einer Aufzugstür mehrere kapazitive, optische oder auf Ultraschallaussendung und Reflexion beruhende Annäherungsfühler vorzusehen und die Erfassungssignale dieser Annäherungsfühler in Differenzialverstärkern miteinander zu vergleichen, um beim Auftreten eines Unterschiedes in den Erfassungssignalen dieser Annäherungsfühler die Türschließbewegung der Aufzugstür zu unterbrechen. Hierdurch soll die Unterbrechung der Türschließbewegung unabhängig von Nullpunktsignalen der einzelnen Näherungsfühler sichergestellt werden. Diese bekannte Anordnung dient somit lediglich einer sicheren Unterbrechung der Schließbewegung der Aufzugstür bei einer Personenannäherung, ermöglicht jedoch keine gezielte Steuerung des Öffnungs- und Schließvorgangs der Aufzugstür gemäß einem bestimmten vorgegebenen Betriebsablauf.

Auch ist es grundsätzlich bekannt, die automatische Spracherkennung zur Steuerung eines Fahrzeuges durch Behinderte, insbesondere zum Öffnen und Schließen der Fenster, einzusetzen (Siemens Forschungs- und Entwicklungsberichte Band 10, 1981, Nr. 5, Seite 316–322). Konkrete Anhaltspunkte für die Steuerung der speziellen Betriebsabläufe bei einer Analysenwaage sind daraus jedoch nicht zu gewinnen.

Der Erfindung liegt die Aufgabe zugrunde, die Unzulänglichkeiten bei der Bedienung einer Analysenwaage der eingangs genannten Art zu beseitigen und die Bedienungsperson von einer manuellen Durchführung der erforderlichen Öffnungs- und Schließvorgänge der beweglichen Gehäuseteile zu befreien.

Erfindungsgemäß wird diese Aufgabe dadurch gelöst, daß mindestens einer der beweglichen Gehäuseteile mit einem Antrieb koppelbar ist, der durch eine in nach einem jeweils vorgebbaren Programm abfragbaren Speicherzuständen eines Rechners verkörperte Ansteuerungseinrichtung berührungslos betätigbar ist.

Die damit erreichten Vorteile sind im wesentlichen darin zu sehen, daß die Bedienungsperson das Öffnen und Schließen der Gehäuseteile berührungslos bewirken kann, d.h. ohne dazu die Hände freimachen zu müssen. Sie spart dadurch mindestens sechs Arbeitsvorgänge bei jedem Dosiervorgang und vermeidet zudem eine allfällige Verunreinigung der Waage und/oder des Wägegutes oder des Gefäßes und des Spachtels beim zwischenzeitlichen Absetzen auf die Arbeitsfläche.

Weitere vorteilhafte Ausgestaltungen sind in den kennzeichnenden Merkmalen der abhängigen Ansprüche enthalten. Dagegen sind die in der folgenden Beschreibung noch erwähnten berührungslosen Sensoren, z.B. sprachgesteuerte Sensoren, mit denen nicht nur in verschiedenen Sprachen oder mit diversen Worten das Öffnen und Schließen ausgelöst, sondern auch weitere Funktionen, z.B. das Tarieren, eingeleitet werden können, ohne daß dazu die Hände freigemacht werden müssen, nicht beansprucht.

Ein Ausführungsbeispiel der Erfindung wird nachfolgend anhand von Zeichnungen beschrieben. Es zeigen:

Figur 1 eine schematische Darstellung einer Waage,
Figur 2 eine Seitenansicht eines Antriebes für den Gehäuseteil,
Figur 3 einen Grundriß des Antriebes in Figur 2 und Figur 4 ein Detail des Antriebes.

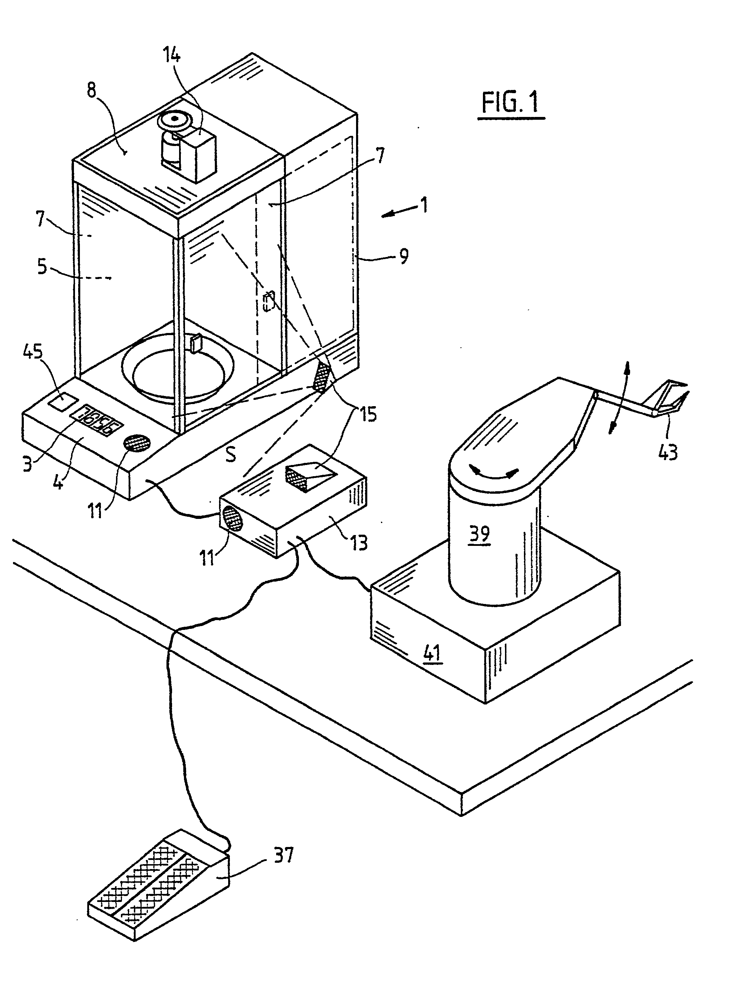

In der Figur 1 ist eine Analysenwaage 1 mit einem Anzeigefeld 3 auf einem Bedienungstableau 4, dem Wägeraum 5 und zwei seitlich den Wägeraum 5 abschließenden beweglichen Gehäuseteilen 7, einem den Wägeraum 5 oben überdeckenden Gehäuseteil 8, sowie dem Gehäuse 9 mit den mechanischen und elektronischen Aggregaten der Analysenwaage 1 dargestellt.

Das Öffnen und Schließen der Gehäuseteile 7 bzw. 8 kann durch einen Antrieb 14 je einzeln oder gemeinsam oder in der Weise erfolgen, daß jeweils ein vertikaler Gehäuseteil 7 zusammen mit dem horizontalliegenden Gehäuseteil 8 oder, sofern möglich, mit dem vorneliegenden Gehäuseteil betätigt wird, sofern die Antriebsorgane entsprechend angepaßt sind.

Eine Ansteuerungseinrichtung für den Antrieb 14 ist in Speicherzuständen eines Rechners 13 verkörpert. An entsprechenden Stellen eines dem Rechner eingegebenen bzw. eingebbaren Programmablaufs erkennt dieser dann, daß er jetzt ein Steuersignal zum Öffnen oder Schließen ausgeben muß. Dies ist bedeutsam besonders bei anspruchsvolleren Systemen, beispielsweise für routinemäßige Serienwägungen.

Auf der Vorderseite der Waage 1 ist zudem ein sprachgesteuerter Sensor 11, z.B. ein Mikrofon, eingesetzt, der mit dem Rechner 13 verbunden ist, welcher Sprachbefehle verarbeitet und in Steuersequenzen für die Energieversorgung des Antriebes 14 der Gehäuseteile 7 und die Tarierung u.ä. umwandelt.

Anstelle des sprachgesteuerten Sensors 11 oder zusätzlich zu diesem kann ein Näherungssensor 15, z.B. ein Infrarot- oder Ultraschallsensor, an der Analysenwaage 1 angebracht sein. Vorzugsweise ist dessen Empfangsbereich auf einen bestimmten Sektor S begrenzt, damit die Signale zur Betätigung der Gehäuseteile 7 bzw. 8 nur gerade bei Eintritt eines Gegenstandes, z.B. der Hand, des Wägegutes oder des Greifers 43 eines Roboters 39, in den Sektor S ausgelöst wird, nicht aber, wenn andere Tätigkeiten im Bereich der Waage, z.B. an deren Bedienungstableau 4, ausgeübt werden. Der Infrarotsensor spricht auf die Handwärme, nicht aber auf Gegenstände an, die in dessen Sensorbereich eintreten.

Der sprachgesteuerte Sensor 11 und/oder der Näherungssensor 15 können selbstverständlich auch auf einem vom Waagengehäuse getrennt aufgestellten Halter angeordnet sein, z.B. auf dem Rechner 13.

Die beweglichen Gehäuseteile 7 und 8, üblicherweise aus Glas hergestellt, sind in herkömmlicher Weise in Führungsnuten im Gehäuse 9 leicht verschiebbar gelagert.

Die Gehäuseteile 7 bzw. 8 können in Verbindung mit dem Antrieb 14 (nur am linken Gehäuseteil 7 eingezeichnet) gebracht werden. Die Gehäuseteile 7 bzw. 8 werden zum Öffnen des Wägeraumes 5 nach hinten und zum Schließen nach vorne bewegt, wobei der Antrieb 14 während des Schiebens reibschlüssig mit dem jeweiligen Gehäuseteil 7 bzw. 8 verbunden und von diesem abkoppelbar ist, wenn die jeweilige Endstellung "geöffnet" oder "geschlossen" erreicht ist.

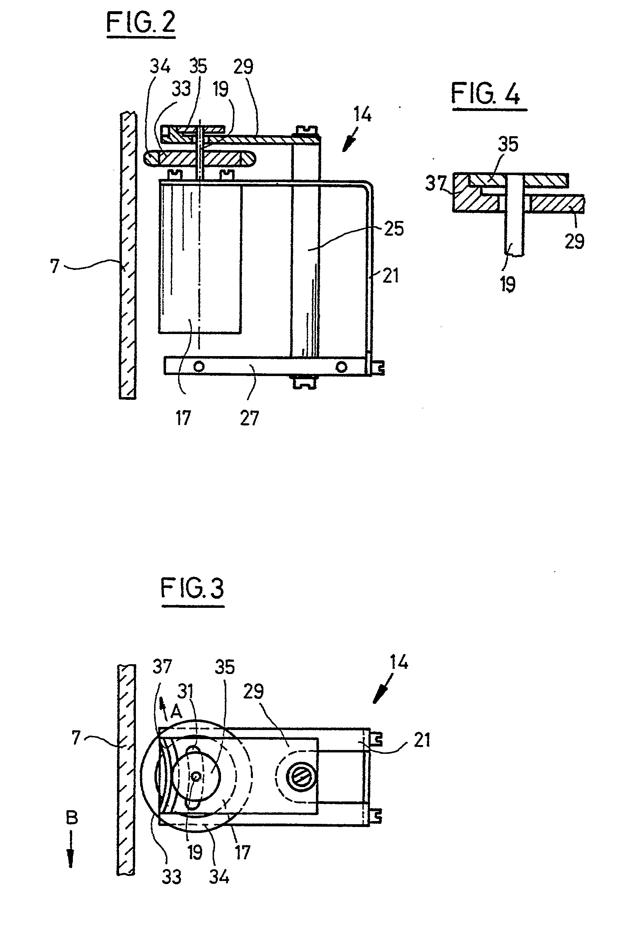

Eine Ausführungsform eines abkoppelbaren Antriebes 14 ist in den Figuren 2 bis 4 dargestellt.

Der Antrieb 14 besteht im wesentlichen aus einem Elektromotor 17, der an einer winkelförmig ausgebildeten Feder 21 befestigt ist. Parallel zur Rotorwelle 19 des Elektromotors 17 ist ein Bolzen 25 starr mit einer Grundplatte 27 verbunden, an der auch die Feder 21 angeschraubt ist. Am oberen Ende des Bolzens 25 ist eine Führungsplatte 29 mit einem v-förmigen Führungsschlitz 31 befestigt, durch welchen die Rotorwelle 19 hindurchragt. Auf der Rotorwelle 19 sitzt oberhalb der Führungsplatte 29 ein metallenes Reibrad 35 und unterhalb der Führungsplatte 29 ein mit einer Gummierung oder einem O-Ring 34 belegtes Reibrad 33. Der Durchmesser des Reibrades 33 ist größer als derjenige des Reibrades 35.

Die Breite des Führungsschlitzes 31 ist größer als der Durchmesser der Rotorwelle 19. Durch die Spannkraft der Feder 21 liegt das Reibrad 35 in der neutralen Ausgangsstellung an einem parallel zum Führungsschlitz 31 verlaufenden Steg 37 an (Figur 4); das Reibrad 33 berührt bei dieser Stellung den anliegenden Gehäuseteil 7 nicht (Figur 3).

Die Grundplatte 27 des Antriebes 14 ist am Gehäuse 9 der Waage 1 befestigt, und der Elektromotor 17 ist mit dem Rechner 13 verbunden.

Eine mit einem berührungslos arbeitenden Sensor 11 bzw. 15 ausgerüstete Waage 1 wird in nachfolgend beschriebener Weise bedient:

Wenn die Waage 1 eine Stand-by-Schaltung für den Rechner 13 aufweist, kann diese bereits durch ein im Rechner 13 entsprechend gespeichertes gesprochenes Codewort eingeschaltet werden. Anschließend kann durch ein weiteres Codewort, z.B. "öffnen" oder "auf", der Gehäuseteil und/oder beide Gehäuseteile 7 bzw. 8 geöffnet und das Eindosieren vorgenommen werden. Mit dem Codewort "schließen" oder "zu" wird der Gehäuseteil 7 bzw. 8 wieder geschlossen und die Wägung durchgeführt.

Bei einer Waage mit einem Näherungssensor 15 erfolgt das Öffnen bei der Annäherung an den beweglichen Gehäuseteil 7 bzw. 8, und das Schließen, nachdem die Hand der Bedienungsperson und/oder das Werkzeug, z.B. der Spachtel, aus dem sensitiven Bereich S entfernt worden ist.

Es ist auch möglich, durch einen Sprachbefehl, z.B. "Tara", das Tarieren der Waage auszulösen. Selbstverständlich können anstelle der deutschen Befehle auch solche in anderen Sprachen, ferner Befehle in verschiedenen Stimmlagen (Frauenstimmen oder Männerstimmen) eingegeben werden.

Selbstverständlich kann auch ein Fußpedal 37 zum Auslösen der Befehle eingesetzt werden.

Anstelle der Befehlsauslösung durch Sensoren 11 bzw. 15 oder durch ein Fußpedal 37 können auch Signale eines den Roboter 39 steuernden Computers 41 verwendet werden. Eine solche Aussteuerung ermöglicht eine Befehlsausgabe zum Öffnen der Gehäuseteile 7 bzw. 8 schon bevor der Greifer 43 des Roboters 39 sich gegen den Wägeraum 5 hin zu bewegen beginnt, wodurch Wartezeiten vor der Waage 1 vermieden bzw. die Arbeitszeit verkürzt werden können.

Zur manuellen Bedienung des elektrischen Antriebes 14 kann auf dem Bedienungstableau 4 der Waage 1 auch ein "Soft-key" 45 vorgesehen werden, auf welchem z.B. bei geschlossenem Wägeraum 5 "auf" und bei geöffnetem Wägeraum 5 "zu" aufleuchtet. Die Bedienungsperson weiß auf diese Weise jederzeit, welches der nächste Schritt ist. Dies kann insbesondere auch dann wichtig sein, wenn die Gehäuseteile 7 bzw. 8 jeweils nur so weit geöffnet werden, wie dies gerade notwendig ist. Eine teilweise Öffnung kann speziell dann vorteilhaft sein, wenn die Beschickung der Waage durch den Roboter 39 erfolgt.

Nach der Auswertung der von den Sensoren 11 bzw. 15, dem Computer 41, dem Fußpedal 31 oder dem Soft-key 45 dem Rechner 13 zugeführten Signale setzt dieser den Elektromotor 17 in der entsprechenden Drehrichtung in Gang. Das Reibrad 35 rollt dabei auf dem Steg 37 ab und bewegt den elastisch aufgehängten Elektromotor 17 bei positiver Drehrichtung (Gegenuhrzeigersinn) im Führungsschlitz 31 in Richtung des Pfeiles A. Das Reibrad 33 gelangt nun in Reibkontakt mit dem Gehäuseteil 7 bzw. 8 und bewegt diesen in Richtung des Pfeiles B. Sobald die Energiezufuhr zum Elektromotor 17 wieder unterbrochen wird, drückt die im während des Antriebsvorganges zusammengequetschten O-Ring gespeicherte Federenergie das Reibrad 35 in die Ausgangsstellung zurück, und gleichzeitig wird die kraftschlüssige Reibverbindung zum Gehäuseteil 7 bzw. 8 gelöst, so daß der Gehäuseteil 7 bzw. 8 von Hand bedient werden kann.

**Patentansprüche**

1. Analysenwaage mit einem durch bewegliche Gehäuseteile verschließbaren Wägeraum, dadurch gekennzeichnet, daß mindestens einer der beweglichen Gehäuseteile (7 bzw. 8) mit einem Antrieb (14) koppelbar ist, der durch eine in nach einem jeweils vorgebbaren Programm abfragbaren Speicherzuständen eines Rechners (13, 41) verkörperte Ansteuerungseinrichtung berührungslos betätigbar ist.

2. Analysenwaage nach Anspruch 1, dadurch gekennzeichnet, daß beim Wägen der Antrieb (14) außer Betrieb oder vom Gehäuseteil (7 bzw. 8) abgekoppelt und zum Öffnen oder Schließen der Gehäuseteile (7 bzw. 8) an diese ankoppelbar ist.

3. Analysenwaage nach Anspruch 2, dadurch gekennzeichnet, daß der Antrieb (14) einen Elektromotor (17) aufweist, der zum Verschieben der Gehäuseteile (7 bzw. 8) an diese ankoppelbar ist.

4. Analysenwaage nach Anspruch 3, dadurch gekennzeichnet, daß der Elektromotor (17) in einem V-förmigen Führungsschlitz (31) gelagert und von einem auf der Rotorwelle (19) des Elektromotors (17) befestigten Reibrad (35) im Führungsschlitz (31) verschiebbar ist, derart, daß ein auf der Rotorwelle (19) befestigtes Reibrad (33) mit einem aufgelegten O-Ring (34) an den Gehäuseteil (7 bzw. 8) anpreßbar ist.

5. Analysenwaage nach Anspruch 4, dadurch gekennzeichnet, daß der Elektromotor (17) an einer Feder (21) schwenkbar aufgehängt ist.

**Claims**

1. An analytical balance comprising a weighing compartment which can be closed by movable housing portions, characterised in that at least one of the movable housing portions (7 or 8) can be coupled to a drive (14) which can be actuated in a contact-less mode by an actuating means embodied in memory conditions of a computer (13, 41), which memory conditions can be interrogated in accordance with a respective predeterminable program.

2. An analytical balance according to claim 1 characterised in that in the weighing operation the drive (14) is inoperative or uncoupled from the housing portion (7 or 8) and can be coupled to the housing portions (7 or 8) for opening or closing thereof.

3. An analytical balance according to claim 2 characterised in that the drive (14) has an electric motor (17) which can be coupled to the housing portions (7 or 8) for displacement thereof.

4. An analytical balance according to claim 3 characterised in that the electric motor (17) is mounted in a V-shaped guide slot (31) and is displaceable in the guide slot (31) by a friction wheel (35) fixed on the rotor shaft (19) of the electric motor (17), in such a way that a friction wheel (33) fixed on the rotor shaft (19) can be pressed with an O-ring (34) fitted thereon against the housing portion (7 or 8).

5. An analytical balance according to claim 4 characterised in that the electric motor (17) is pivotably suspended on a spring (21).

**Revendications**

1. Balance pour analyse comportant une enceinte de pesée, pouvant être fermée par des parties de boîtier mobiles, caractérisée en ce qu'au moins l'une des parties de boîtier (7 ou 8) mobiles peut être accouplée à un mécanisme d'entraînement (14) qui est actionné, sans contact, par un dispositif de commande, matérialisé par des états de mémoire d'un calculateur (13, 41) pouvant être interrogés suivant un programme donné.

2. Balance pour analyse selon la revendication 1, caractérisée en ce que pendant la pesée, le mécanisme d'entraînement (14) est mis hors service ou désolidarisé de la partie de boîtier (7 ou 8) et peut être accouplé aux parties de boîtier (7 ou 8), pour leur ouverture ou leur fermeture.

3. Balance pour analyse selon la revendication 2, caractérisée en ce que le mécanisme d'entraînement (14) comporte un moteur électrique (17) qui peut être accouplé aux parties de boîtier (7 ou 8), pour leur déplacement.

4. Balance pour analyse selon la revendication 3, caractérisée en ce que le moteur électrique (17) est monté dans une fente de guidage (31), en forme de V, et est déplaçable dans la fente de guidage (31), par une roue de friction (35) fixée sur l'arbre de rotor (19) du moteur électrique (17), de manière qu'une roue de friction (33), fixée sur l'arbre de rotor (19), puisse être pressée contre la partie de boîtier (7 ou 8) par un joint torique (34) placé sur la roue de friction.

5. Balance pour analyse selon la revendication 4, caractérisée en ce que le moteur électrique (17) est suspendu à un ressort (21), de manière à pouvoir pivoter.

FIG. 1

EP 0 216 035 B1

## FIG. 2

## FIG. 4

## FIG. 3